# FASCICULE DE BREVET EUROPEEN

(11) **EP 2 097 899 B1**
(45) Date de publication et mention de la délivrance du brevet: **20.10.2010**
(21) Numéro de dépôt: 07870375.8
(22) Date de dépôt: 04.12.2007
(51) Int. Cl.: G11B 7/26

(54) **FORMATION DE ZONES EN CREUX PROFONDES ET SON UTILISATION LORS DE LA FABRICATION D'UN SUPPORT D'ENREGISTREMENT OPTIQUE**
FORMIERUNG TIEFER UND HOHLER BEREICHE UND DEREN VERWENDUNG BEI DER HERSTELLUNG EINES OPTISCHEN AUFZEICHNUNGSMEDIUMS
FORMATION OF DEEP HOLLOW AREAS AND USE THEREOF IN THE PRODUCTION OF AN OPTICAL RECORDING MEDIUM

(30) Priorité: 08.12.2006 FR 0610736
(43) Date de publication de la demande: 09.09.2009
(73) Titulaire: Commissariat à l'Énergie Atomique et aux Énergies Alternatives, 75015 Paris (FR)
(72) Inventeur: FARGEIX, Alain, 38240 Meylan (FR); MARTIN, Brigitte, 38120 Saint Egrève (FR)
(74) Mandataire: Hecké, Gérard
(86) Numéro de dépôt international: PCT/FR2007/001988
(87) Numéro de publication internationale: WO 2008/074947

(56) Documents cités:
- EP-A- 0 596 439
- US-A- 5 501 926
- US-A1- 2004 209 199
- US-A1- 2005 106 508

## Description

### Domaine technique de l'invention

L'invention concerne un procédé de formation d'au moins une zone en creux dans un empilement d'au moins une couche supérieure et une couche inférieure et l'utilisation d'un tel procédé lors de la fabrication d'un support d'enregistrement optique.

### État de la technique

Les supports ou disques d'enregistrement optique comportent généralement au moins un substrat en polycarbonate comportant des zones en relief et en creux, également connues sous les noms anglo-saxons de « lands » et de « pits », et correspondant à des données d'information. Ainsi, les substrats comportent une face libre structurée selon un motif prédéterminé.

De tels substrats sont généralement fabriqués en grande quantité, par moulage par injection, à l'aide d'un moule ou d'un support matrice, également connu sous le nom anglo-saxon de « master disk » ou de « stamper ». Une des faces libres du support matrice est structurée sous une forme complémentaire au motif prédéterminé désiré pour les substrats. Le support matrice est obtenu à partir d'un modèle original. À titre d'exemple, la demande de brevet US-A-2005/0045587 décrit un procédé permettant de fabriquer le modèle original utilisé lors de la fabrication de disques optiques ainsi que le procédé de fabrication desdits disques optiques. Le modèle original est réalisé à partir d'un empilement comportant un substrat, par exemple en verre ou en silicium, et une couche en matériau sensible à la chaleur. Le matériau sensible à la chaleur est un oxyde d'antimoine, apte à changer d'état lors d'un échauffement provoqué par une exposition lumineuse de ladite couche. La face libre de la couche en matériau sensible à la chaleur est, alors, structurée en exposant certaines zones de ladite face libre, à un faisceau laser et en éliminant lesdites zones exposées. Une telle opération permet, ainsi, de réaliser des zones en relief et des zones en creux dans la couche en matériau sensible. Le modèle original obtenu est, ensuite, utilisé pour former un disque matrice métallique, destiné à servir de moule lors de la fabrication par moulage par injection des disques optiques.

Il existe des variantes de réalisation pour former des modèles originaux. Ainsi, dans la demande de brevet US-2004/0209199, la couche en matériau sensible à la chaleur est formée de deux sous-couches superposées en matériaux distincts, par exemple en cuivre et en aluminium. Des zones de l'empilement formé par les deux sous-couches sont ensuite exposées, par la face libre de l'empilement, à un faisceau laser. L'échauffement provoqué par le faisceau laser provoque une diffusion ou une dissolution des deux matériaux de manière à former une zone constitué par un matériau issu du mélange ou de la réaction des deux matériaux initiaux. Une fois l'empilement structuré, celui-ci peut servir de masque pour graver, dans le substrat, des petites marques convexes et concaves. La couche structurée est, ensuite, retirée et le substrat ainsi gravé est utilisé comme modèle original.

Depuis l'apparition du mode de stockage des données sur des supports d'enregistrement optique, notamment sur des supports de type disque compact (CD ou « Compact Disc »), les dimensions des motifs à inscrire ont été réduites à plusieurs reprises. Or, pour une des dernières générations de supports d'enregistrement optique comprenant les supports optiques utilisant un laser bleu, plus connu sous le nom de disques « Blu-Ray », les développements récents tendent vers la formation de zones en creux dans le substrat plus profondes que pour les supports habituels. La profondeur envisagée pour les zones en creux des disques « Blu-Ray » est d'environ 80nm pour les mémoires à lecture seule (également appelées ROM ou « Read Only Memory ») alors que, pour les disques enregistrables une fois (ou disques de type R) et les disques réinscriptibles (ou disques RW), elle est d'environ 40nm. Les méthodes classiques pour fabriquer les modèles pour supports d'enregistrement optique, telles que celle décrite, par exemple, dans la demande de brevet US-A-2005/0045587, ne permettent pas d'obtenir des zones en relief présentant un tel niveau de profondeur. Le changement de phase provoqué par échauffement est effectivement limité au niveau de la surface de la couche en matériau sensible à la chaleur et ne permet pas une structuration profonde de ladite couche. L'épaisseur de la couche en matériau sensible à la chaleur est souvent calculée de manière à optimiser la réponse thermique du matériau. Or, comme les régions à insoler doivent généralement présenter une faible largeur, cette réponse est limitée en profondeur de pénétration. Une grande profondeur de pénétration thermique supposerait un élargissement important de la largeur de la zone à insoler ainsi qu'un allongement de la durée d'insolation ce qui contribue également à un élargissement des zones insolées, ce qui n'est acceptable.

Dans la demande de brevet WO-A-2005/101398, il a été proposé d'augmenter la profondeur des zones en creux en disposant, entre la couche en matériau sensible à la chaleur et le substrat, une couche intermédiaire destinée à être structurée pour prolonger les zones en creux formées dans la couche en matériau sensible à la chaleur. La couche intermédiaire peut être une couche en résine photosensible au rayonnement ultraviolet et plus particulièrement à base de Diazonaphthoquinone. La couche en matériau sensible à la chaleur est alors utilisée comme masque pour l'insolation et le développement de ladite couche intermédiaire. Ainsi, la structuration de la couche intermédiaire est réalisée à travers la couche en matériau sensible à la chaleur, elle-même structurée, le rayonnement atteignant ladite couche en matériau sensible à la chaleur, par sa surface libre. Une couche métallique, dissipatrice de chaleur, peut éventuellement être disposée entre la couche intermédiaire et le substrat, de manière à contrôler l'accumulation de chaleur susceptible de se produire pendant l'écriture de données. S'il n'y a pas de couche métallique entre la couche intermédiaire et le substrat, les régions libres du substrat, c'est-à-dire les régions du substrat coïncidant avec les zones en creux formées dans la couche en matériau sensible à la chaleur et dans la couche intermédiaire, peuvent être gravées, afin d'augmenter encore la profondeur des zones en creux. Dans ce cas, la couche en matériau sensible à la chaleur forme un masque de gravure pour le substrat.

Un tel procédé permet d'obtenir des zones en creux plus profondes que les procédés classiques. Cependant, il présente au moins deux inconvénients majeurs. Tout d'abord, la couche intermédiaire en résine photosensible doit, généralement subir un traitement thermique de durcissement à haute température, de manière à permettre le dépôt de la couche en matériau sensible à la chaleur. Or, un tel traitement thermique provoque une dégradation des propriétés de photosensibilité de la résine, ce qui peut être nuisible pour sa structuration ultérieure. De même, l'insolation de la couche en matériau sensible à la chaleur peut altérer les propriétés de la couche intermédiaire disposée sous ladite couche. Enfin, avec un tel procédé, si le substrat doit être gravé, la couche en matériau sensible à la chaleur sert, de masque de gravure. Or, un tel masque n'est généralement pas adapté aux dispositifs de gravure sèche ou humide, usuellement utilisés dans le domaine de la microélectronique.

La demande de brevet US 2005/106508 A1, décrit un procédé de formation d'au moins une zone en creux dans un empilement d'au moins une couche supérieure et une couche inférieure comportant l'étape de structuration de la couché supérieure pour former au moins une première région en creux traversant ladite couche supérieure. Si la zone en creux n'est pas assez profonde, la couche protective pourrait être gravée par la gravure à l'eau-forte d'ion réactive.

De manière plus générale, le problème lié à l'obtention de zones en creux profondes se pose dans d'autres domaines que celui des supports d'enregistrement optique. C'est notamment le cas dans le domaine de la lithographie.

### Objet de l'invention

L'invention a pour but de former facilement des zones en creux profondes dans un empilement d'au moins une couche supérieure et une couche inférieure, et plus particulièrement lors de la fabrication de supports d'enregistrement optique, tout en remédiant aux inconvénients de l'art antérieur.

Selon l'invention, ce but est atteint par les revendications annexées et, plus particulièrement, par le fait que le procédé comporte les étapes successives suivantes :
i) structuration de la couche supérieure pour former au moins une première région en creux traversant ladite couche supérieure,
ii) formation, sur la couche supérieure structurée, d'un masque de gravure, consistant :
   - à déposer, sur la couche supérieure structurée, une couche en résine, positivement photosensible à un rayonnement optique d'une première longueur d'onde prédéterminée, les couches inférieure et supérieure de l'empilement étant respectivement transparente et opaque à la première longueur d'onde prédéterminée,
   - à exposer ladite couche en résine, audit rayonnement optique, à travers l'empilement
   - et à révéler la couche en résine,
iii) gravure, à travers ledit masque de gravure, de la couche inférieure, pour former au moins une seconde région en creux prolongeant la première région en creux
iv) et retrait dudit masque de gravure.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 9 représentent schématiquement, en coupe, un mode particulier de réalisation, selon l'invention.
- Les figures 10 à 13 représentent schématiquement, en coupe, différentes étapes d'une variante de réalisation, selon l'invention.
- La figure 14 représente schématiquement un empilement dans lequel sont formées des zones en creux profondes selon une autre variante de réalisation de l'invention.

### Description de modes particuliers de réalisation

Au moins une zone en creux est formée dans un empilement d'au moins deux couches minces superposées, respectivement appelées couches supérieure et inférieure et de préférence constituées par des matériaux distincts. La couche supérieure est structurée pour former au moins une première région en creux la traversant. Puis, la première région en creux est prolongée par une seconde région en creux formée dans la couche inférieure, par gravure à travers un masque de gravure formé, préalablement, sur la couche supérieure structurée.

Dans l'empilement, la couche supérieure est, de préférence, constituée par un matériau apte à changer de phase ou d'état, sous l'action d'un échauffement provoqué par un rayonnement optique. La couche supérieure est, par exemple, un oxyde thermiquement stable mais sous-stoechiométrique, tel qu'un oxyde de molybdène (MoOₓ), ou un oxyde thermodynamiquement instable mais sur-stoechiométrique tel qu'un oxyde de platine (PtOₓ), ou un matériau à changement de phase tel que Ge₂Sb₂Te₅ également appelé GST. Elle est absorbante pour la longueur d'onde du rayonnement optique destiné à provoquer un échauffement et donc un changement d'état ou de phase dans ladite couche supérieure. La capacité de la couche supérieure à changer de phase ou d'état sous l'action d'un échauffement est, dans ce cas, utilisée pour structurer ladite couche supérieure et donc former la première région en creux.

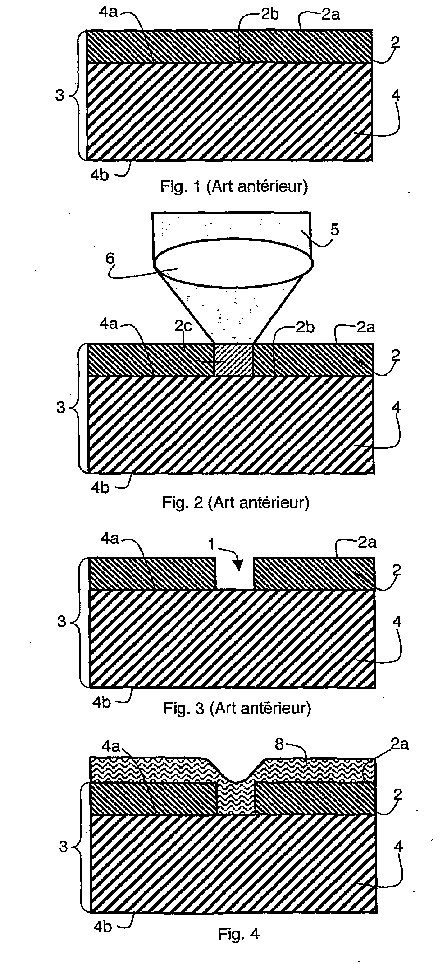

Les figures 1 à 3 illustrent, à titre d'exemple, la formation d'une première région en creux 1 dans une couche supérieure 2 d'un empilement 3.

L'empilement 3 représenté sur la figure 1 est, ainsi, constitué par la superposition de la couche supérieure 2 et d'une couche inférieure 4, constituée, par exemple, par un substrat. La couche inférieure 4 est, par exemple, en oxyde de silicium. A titre d'exemple, la couche inférieure 4 peut également être en alumine, en zircone, en quartz ou en saphir. De plus, les couches supérieure 2 et inférieure 4 comportent chacune une première face 2a, 4a et une seconde face 2b, 4b. Ainsi, dans l'empilement 3, la seconde face 2b de la couche supérieure 2 est en contact avec la première face 4a de la couche inférieure 4 tandis que la première face 2a de la couche supérieure 2 et la seconde face 4b de la couche inférieure 4 sont libres et forment respectivement les faces avant et arrière dudit empilement 3.

Comme représenté sur la figure 2, la couche supérieure 2 de l'empilement 3 est, ensuite, insolée localement par un rayonnement optique 5 d'une longueur d'onde prédéterminée λ, depuis la face avant 2a de l'empilement 3. Ainsi, sur la figure 2, une zone 2c de la couche supérieure 2 est exposée au rayonnement optique 5 focalisé, par exemple, sur ladite zone 2c, par une lentille 6. Le rayonnement optique 5 provoque un échauffement localisé dans la zone 2c. La chaleur induite par le rayonnement optique 5 provoque un changement de phase ou d'état dans la zone 2c alors que l'état ou la phase de la partie non insolée de la couche supérieure 2 n'est pas modifié.

La zone 2c se trouve ainsi, après l'étape d'insolation, dans un état ou une phase différent de celui du reste de la couche supérieure 2 et, de préférence, dans un état ou une phase stable thermodynamiquement. A titre d'exemple, pour une couche supérieure 2 initialement en PtOₓ, la zone 2c, après insolation peut être en platine. Pour MoOₓ, la zone 2c, après insolation, est constituée d'un mélange de MoO₂/Mo et pour GST amorphe, la zone 2c, après insolation, est sous forme cristalline.

Comme illustré sur la figure 3, la zone insolée 2c de la couche supérieure 2 est, ensuite, éliminée pour libérer la première région en creux 1 dans la couche supérieure 2. L'élimination de la zone insolée 2c est, réalisée de manière classique, par exemple par dissolution dans une solution. Cette étape est, généralement, appelée étape de révélation. La face avant 2a de l'empilement 3 comporte ainsi une première région 1 formant une ouverture traversant la couche supérieure 2, de sa première face 2a jusqu'à sa seconde face 2b. L'ouverture ainsi créée dans la couche supérieure 2 permet donc de libérer une partie de la première face 4a de la couche inférieure 4.

La première région en creux 1 est, ensuite, prolongée par une seconde région en creux formée dans la couche inférieure 4. Pour ce faire et comme représenté sur les figures 4 à 7, un masque de gravure 7 est formé sur la couche supérieure 2 préalablement structurée.

Le masque de gravure 7 est, ainsi, formé en déposant, sur la face avant 2a de l'empilement 3 et dans la première région en creux 1, une couche en résine 8. Sur la figure 4, la couche en résine 8 recouvre la première face 2a de la couche supérieure 2 ainsi que la partie préalablement libérée de la première face 4a de la couche inférieure 4, de sorte que la première région en creux 1 est totalement remplie par ladite résine.

La résine est positivement photosensible à un rayonnement optique d'une longueur d'onde λ', distincte de celle du rayonnement optique 5 préalablement utilisé pour structurer la couche supérieure 2. A titre d'exemple, la longueur d'onde λ' utilisée pour former le masque de gravure 7 peut être d'environ 193 nm tandis que la longueur d'onde λ utilisée pour la structuration de la couche supérieure 2 peut être de l'ordre de 405 nm. A titre d'exemple, la résine photosensible positive peut être une résine commercialisée sous le nom de EPIC 2300 (ArF) par la société RHOM&HASS pour une photosensibilité à une longueur d'onde λ' de 193nm ou une résine commercialisée sous le nom de UV2400 (KrF) par la même société pour une photosensibilité à une longueur d'onde λ' de 248nm.

Par ailleurs, les couches inférieure 4 et supérieure 2 de l'empilement 3 sont respectivement transparente et opaque à la longueur d'onde λ' du rayonnement optique utilisé pour former le masque de gravure 7.

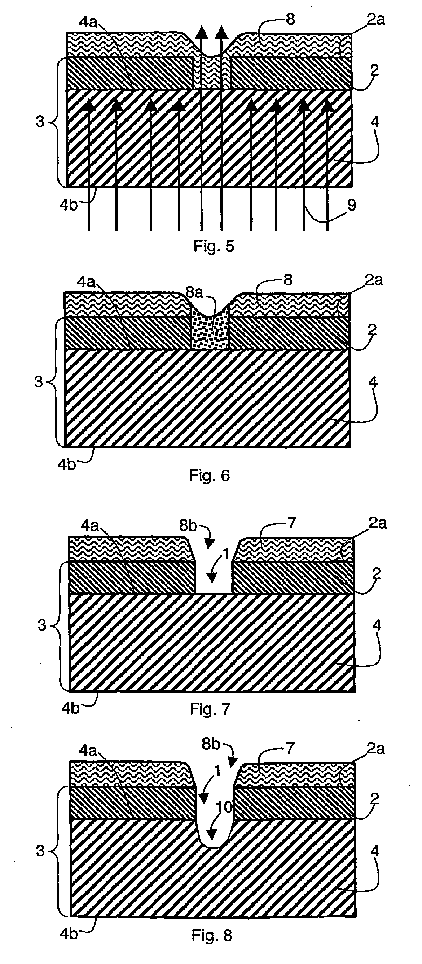

Comme représenté sur la figure 5, la couche en résine 8 est, ainsi, exposée à un rayonnement lumineux 9, par la face arrière 4b de l'empilement 3, de sorte que le rayonnement lumineux 9 traverse l'empilement 3 depuis la face arrière 4b, pour atteindre la couche en résine 8. L'insolation est, plus particulièrement, réalisée en pleine tranche de sorte que la totalité de la face arrière 4b de l'empilement 3 est insolée. Le rayonnement optique 9 traverse la couche inférieure 3 car celle-ci est transparente à la longueur d'onde λ'. Par contre, la couche supérieure 2 étant opaque à la longueur d'onde λ', le rayonnement optique 9 est arrêté par ladite couche supérieure 2. Ainsi, la couche supérieure 2 sert de masque d'insolation pour la couche en résine 8, de sorte que seule la partie 8a de la couche en résine 8 contenue dans la première région en creux 1, reçoit le rayonnement optique 9 et est donc insolée comme représentée sur la figure 6.

Comme représenté sur la figure 7, la couche en résine 8 est, ensuite, révélée en éliminant la partie insolée 8a, de manière à former le masque de gravure 7. L'étape de révélation libère, ainsi, la première région en creux 1 dans la couche supérieure 2 et laisse apparaître à nouveau une partie de la première face 4a de la couche inférieure 4. De plus, la couche supérieure 2 structurée ayant servi de masque d'insolation pour la couche en résine 8, l'élimination de la partie insolée 8a provoque la formation d'une région en creux complémentaire 8b, dans la couche en résine 8 et traversant ladite couche en résine. La région en creux complémentaire 8b prolonge la première région en creux 1, formée dans la couche supérieure 2. Ainsi, la paroi latérale délimitant ladite région en creux complémentaire 8b est sensiblement alignée avec la paroi délimitant la première région en creux 1.

Comme représenté sur la figure 8, une fois le masque de gravure 7 formé, la couche inférieure 4 est gravée à travers ledit masque 7, pour former, dans la couche inférieure 4, une seconde région en creux 10. La gravure de la seconde région en creux 10 est réalisée à travers la région en creux complémentaire 8b et la première région en creux 1. La seconde région en creux 10 prolonge donc la première région en creux 5a, de sorte que la paroi latérale délimitant la seconde région en creux 10 est sensiblement alignée avec la paroi latérale de la première région en creux 1. La technique de gravure utilisée peut être une technique de gravure sèche dans le cas d'une couche inférieure 4 en oxyde de silicium, et plus particulièrement une gravure ionique réactive avec une atmosphère comprenant SF₆ et CHF₃.

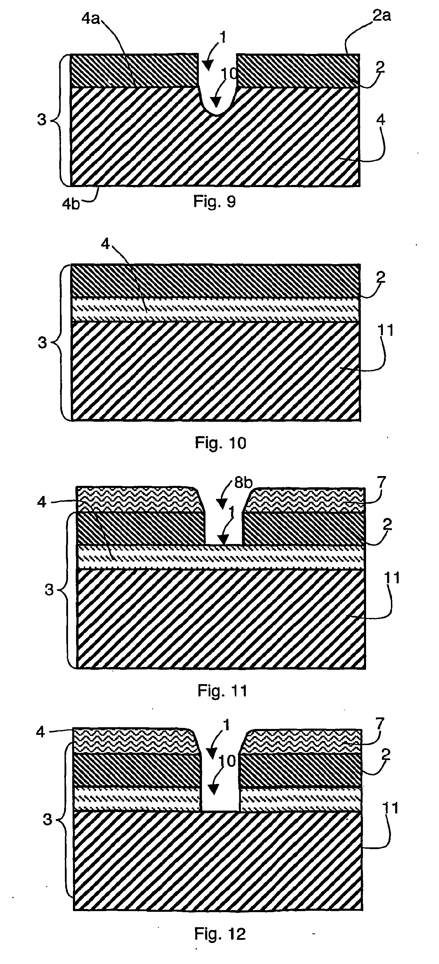

Une fois, le masque de gravure 7 retiré (figure 9), l'ensemble formé par les première et seconde régions en creux 1 et 10 correspond à une zone en creux présentant une profondeur supérieure à celle usuellement obtenue avec les techniques de l'art antérieur. Il est à noter que le retrait du masque 7 peut, dans certains cas, provoquer une élimination partielle de la couche supérieure 2, diminuant, ainsi, la profondeur de la première région en creux 1. Dans ces cas, l'épaisseur de la couche inférieure et/ou la gravure de la couche inférieure 3 peuvent être ajustées pour obtenir la profondeur désirée pour la zone en creux. A titre d'exemple, une zone en creux d'une profondeur de l'ordre de 80 nm peut être obtenue à partir d'une couche supérieure 2 de 30nm d'épaisseur et d'une couche en résine 8 d'une épaisseur de 70nm environ. Dans ce cas, la profondeur de la seconde région en creux 10 gravée dans la couche inférieure 4 est d'environ 50nm.

Le fait de graver la couche inférieure par l'intermédiaire d'un masque de gravure en résine photosensible, formé par insolation à travers la couche inférieure de sorte que la couche supérieure sert de masque d'insolation, permet non seulement d'obtenir une zone en creux profonde mais également de remédier aux inconvénients de l'art antérieur et plus particulièrement de la demande de brevet WO-A-2005/101398. En effet, la couche en résine photosensible n'a pas besoin de subir un traitement de durcissement à haute température après son dépôt et l'insolation de la couche supérieure a lieu avant le dépôt de la couche en résine photosensible. Ces deux facteurs préservent, ainsi, les propriétés de photosensibilité de la couche en résine photosensible et améliorent sa structuration ultérieure pour former le masque de gravure. De plus, le procédé selon l'invention permet d'utiliser directement les techniques usuelles de gravure utilisées dans le domaine de la microélectronique. En effet, la gravure de la seconde région est réalisée par l'intermédiaire d'un masque de gravure formé par la couche en résine photosensible 8 et disposé sur la couche supérieure. Or, les techniques usuelles de gravure de la microélectronique utilisent toujours des masques en résine photosensible. Par contre, dans la demande de brevet WO-A-2005/101398, le masque de gravure est formé par la couche en matériau sensible à la chaleur, disposé sur une couche intermédiaire, éventuellement en résine photosensible, ce qui nécessite une adaptation des techniques de gravure.

L'invention n'est pas limitée au mode de réalisation représenté sur les figures 1 à 9. Plus particulièrement, une pluralité de zones en creux peut être formée simultanément dans l'empilement 3.

De plus, l'empilement 3 peut comporter plus de deux couches minces, la couche inférieure 4 restant la couche mince directement en contact avec la couche supérieure 2. Ainsi, à titre d'exemple et comme représenté sur les figures 10 à 13, l'empilement 3, dans lequel est formée au moins une zone en creux, peut successivement comporter une couche supérieure 2, une couche inférieure 4 et un substrat 11, également transparent à la longueur d'onde λ'. Dans ce cas, la couche inférieure 4 n'est pas constituée par un substrat, mais par une couche mince intermédiaire disposée entre la couche supérieure 2 et un substrat 11. La couche inférieure 4 est, de préférence, constituée par un matériau distinct du matériau formant le substrat 11 et du matériau formant la couche supérieure 2. Le substrat 11 est, par exemple, en oxyde de silicium tandis que la couche inférieure 4 est une couche mince en alumine ou en un mélange de sulfure de zinc et d'oxyde de silicium ou du nitrure de silicium.

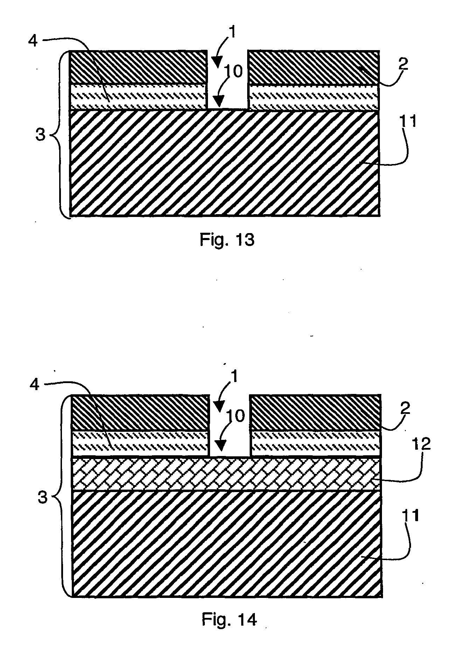

Comme représenté sur les figures 11 à 13, les étapes de structuration de la couche supérieure 2, de formation du masque de gravure 7 et de gravure de la couche inférieure 4 restent identiques au mode de réalisation décrit aux figures 1 à 9. La profondeur de la zone en creux formée dans l'empilement correspond, sur la figure 13, sensiblement à la somme des épaisseurs des couches supérieure 2 et inférieure 4. De plus, selon un mode particulier de réalisation, la gravure peut être prolongée de manière à former, dans le substrat 11, une troisième région en creux (non représentée) prolongeant la seconde région en creux 10. Selon une autre alternative et comme représenté sur la figure 14, une couche supplémentaire 12, transparente également à la longueur d'onde λ', peut être disposée entre la couche inférieure 4 et le substrat 11, pour arrêter la gravure et protéger le substrat 11. La couche supplémentaire 12 est insensible à la gravure de la couche inférieure et elle est, par exemple, constituée par une couche fine métallique, par exemple en chrome ou en argent, d'environ 8nm d'épaisseur par exemple, ou bien par une couche en nitrure de silicium d'environ 15nm d'épaisseur ou une couche en silicium amorphe d'environ 10nm d'épaisseur.

Un tel procédé peut être plus particulièrement utilisé lors de la fabrication de supports d'enregistrements optique et notamment pour la fabrication de modèles originaux.

## Revendications

1. Procédé de formation d'au moins une zone en creux dans un empilement (3) d'au moins une couche supérieure (2) et une couche inférieure (4), **caractérisé en ce qu'**il comporte les étapes successives suivantes :
i) structuration de la couche supérieure (2) pour former au moins une première région en creux (1) traversant ladite couche supérieure (2),
ii) formation, sur la couche supérieure (2) structurée, d'un masque de gravure (7), consistant :
- à déposer, sur la couche supérieure (2) structurée, une couche en résine (8), positivement photosensible à un rayonnement optique (9) d'une première longueur d'onde prédéterminée (λ'), les couches inférieure (4) et supérieure (2) de l'empilement (3) étant respectivement transparente et opaque à la première longueur d'onde prédéterminée (λ'),
- à exposer ladite couche en résine (8), audit rayonnement optique (9), à travers l'empilement (3)
- et à révéler la couche en résine (8),
iii) gravure, à travers ledit masque de gravure (7), de la couche inférieure (4), pour former au moins une seconde région en creux (10) prolongeant la première région en creux (1)
iv) et retrait dudit masque de gravure (7).

2. Procédé selon la revendication 1, **caractérisé en ce que** la couche supérieure (2) est constituée, avant sa structuration, par un matériau apte à changer de phase ou d'état sous l'action d'un échauffement provoqué par un rayonnement optique (5) d'une seconde longueur d'onde prédéterminée (λ) distincte de la première longueur d'onde (λ').

3. Procédé selon la revendication 2, **caractérisé en ce que** la première région en creux (1) est formée en exposant, depuis la surface libre (2a) de la couche supérieure (2), au moins une zone (2c) de ladite couche supérieure (2) à un rayonnement optique (5) de seconde longueur d'onde (λ) et en éliminant ladite zone exposée (2c).

4. Procédé selon l'une des revendications 2 et 3, **caractérisé en ce que** le matériau de la couche supérieure (2) est choisi parmi :
- les oxydes thermodynamiquement stables et sous-stoechiométriques,
- les oxydes thermodynamiquement instables et sur-stoechiométriques
- et les matériaux à changement de phase.

5. Procédé selon l'une quelconque des revendications 1 à 4, **caractérisé en ce que** la valeur de la seconde longueur d'onde (λ) est de 405 nm.

6. Procédé selon l'une quelconque des revendications 1 à 5, **caractérisé en ce que** la valeur de la première longueur d'onde (λ') est de 193 nm.

7. Procédé selon l'une quelconque des revendications 1 à 6, **caractérisé en ce que** l'empilement (3) comporte un substrat transparent à la première longueur d'onde.

8. Procédé selon la revendication 7, **caractérisé en ce que** le substrat constitue la couche inférieure (4).

9. Procédé selon la revendication 8, **caractérisé en ce que** le substrat est en oxyde de silicium, en alumine, en zircone, en saphir ou en quartz.

10. Procédé selon la revendication 7, **caractérisé en ce que** la couche inférieure (4) est disposée entre la couche supérieure (2) et ledit substrat (11).

11. Procédé selon la revendication 10, **caractérisé en ce que** la couche inférieure (4) est une couche mince en alumine ou en un mélange de sulfure de zinc et d'oxyde de silicium ou en nitrure de silicium.

12. Procédé selon l'une des revendications 10 et 11, **caractérisé en ce qu'**une couche supplémentaire (12), transparente à la première longueur d'onde (λ') et insensible à la gravure de la couche inférieure (4), est disposée entre la couche inférieure (4) et le substrat (11).

13. Utilisation d'un procédé selon l'une quelconque des revendications 1 à 12 lors de la fabrication d'un support d'enregistrement optique.

## Claims

1. Method for forming at least one hollow zone in a stack (3) of at least one upper layer (2) and one lower layer (4), **characterized in that** it comprises the following successive steps:
i) patterning of the upper layer (2) to form at least a first hollow region (1) passing through the said upper layer (2),
ii) formation of an etching mask (7) on the patterned upper layer (2), consisting:
- in depositing a resin layer (8), positively photosensitive to an optic radiation (9) of a predetermined first wavelength (λ'), on the patterned upper layer (2), the lower (4) and upper (2) layers of the stack (3) being respectively transparent and opaque to the predetermined first wavelength (λ'),
- in exposing said resin layer (8) to said optic radiation (9) through the stack (3),
- and in developing the resin layer (8),
iii) etching the lower layer (4) through said etching mask (7) to form at least a second hollow region (10) extending the first hollow region (1),
iv) and removing said etching mask (7).

2. Method according to claim 1, **characterized in that**, before it is patterned, the upper layer (2) is formed by a material able to change phase or state due to the action of heating caused by an optic radiation (5) of a predetermined second wavelength (λ) different from the first wavelength (λ').

3. Method according to claim 2, **characterized in that** the first hollow region (1) is formed by exposing at least one area (2c) of said upper layer (2) to an optic radiation (5) of second wavelength (λ), from the free surface (2a) of the upper layer (2), and by removing said exposed area (2c).

4. Method according to either one of claims 2 and 3, **characterized in that** the material of the upper layer (2) is chosen from:
- thermodynamically stable and sub-stoichiometric oxides,
- thermodynamically unstable and super-stoichiometric oxides,
- and phase-change materials.

5. Method according to any one of claims 1 to 4, **characterized in that** the value of the second wavelength (λ) is 405 nm.

6. Method according to any one of claims 1 to 5, **characterized in that** the value of the first wavelength (λ') is 193 nm.

7. Method according to any one of claims 1 to 6, **characterized in that** the stack (3) comprises a substrate transparent to the first wavelength.

8. Method according to claim 7, **characterized in that** the substrate constitutes the lower layer (4).

9. Method according to claim 8, **characterized in that** the substrate is made from silicon oxide, alumina, zircon, sapphire or quartz.

10. Method according to claim 7, **characterized in that** the lower layer (4) is arranged between the upper layer (2) and said substrate (11).

11. Method according to claim 10, **characterized in that** the lower layer (4) is a thin layer of alumina or of a mixture of zinc sulfide and silicon oxide or silicon nitride.

12. Method according to either one of claims 10 and 11, **characterized in that** an additional layer (12), transparent to the first wavelength (λ') and insensitive to etching of the lower layer (4), is arranged between the lower layer (4) and the substrate (11).

13. The use of a method according to any one of claims 1 to 12 in fabrication of an optic recording medium.

## Patentansprüche

1. Verfahren zur Bildung von mindestens einer Hohlraum-Zone in einem Stapel (3) mit mindestens einer oberen Schicht (2) und einer unteren Schicht (4),
**dadurch gekennzeichnet,**
**dass** es die folgenden aufeinander folgenden Verfahrensschritte umfasst:
i) Strukturierung der oberen Schicht (2), um mindestens einen ersten Hohlraum-Bereich (1) zu bilden, der die genannte obere Schicht (2) durchquert,
ii) Bildung einer Ätzmaske (7) auf der strukturierten oberen Schicht (2), indem:
- auf der strukturierten oberen Schicht (2) eine Harzschicht (8) aufgetragen wird, die positiv lichtempfmdlich auf eine optische Bestrahlung (9) mit einer ersten vorbestimmten Wellenlänge (λ') ist, wobei die untere Schicht (4) und die obere Schicht (2) des Stapels (3) lichtdurchlässig bzw. lichtundurchlässig für die erste vorbestimmte Wellenlänge (λ') sind,
- diese Harzschicht (8) durch den Stapel (3) hindurch dieser optischen Bestrahlung (9) ausgesetzt wird,
- und die Harzschicht (8) entwickelt wird.
iii) Ätzung der unteren Schicht (4) durch die genannte Ätzmaske (7) hindurch, um mindestens einen zweiten Hohlraum-Bereich (10) zu bilden, der den ersten Hohlraum-Bereich (1) fortsetzt,
iv) und Entfernen der Ätzmaske (7).

2. Verfahren nach Anspruch 1,
**dadurch gekennzeichnet,**
**dass** die obere Schicht (2) vor ihrer Strukturierung aus einem Werkstoff gebildet wird, der geeignet ist, eine Phasen- oder Zustandsänderung zu erfahren, und zwar unter der Einwirkung einer Erwärmung, die durch eine optische Bestrahlung (5) mit einer zweiten vorbestimmten Wellenlänge (λ), die sich von der ersten Wellenlänge (λ') unterscheidet, hervorgerufen wird.

3. Verfahren nach Anspruch 2,
**dadurch gekennzeichnet,**
**dass** der erste Hohlraum-Bereich (1) gebildet wird, indem von der freien Oberfläche (2a) der oberen Schicht (2) ab mindestens ein Bereich (2c) dieser oberen Schicht (2) einer optischen Bestrahlung (5) mit der zweiten Wellenlänge (λ) ausgesetzt wird, und indem dieser ausgesetzte Bereich (2c) entfernt wird.

4. Verfahren nach einem der Ansprüche 2 und 3,
**dadurch gekennzeichnet,**
**dass** der Werkstoff der oberen Schicht (2) gewählt wird unter:
- den thermodynamisch stabilen und substöchiometrischen Oxiden,
- den thermodynamisch unstabilen und erhöht stöchiometrischen Oxiden,
- und den Werkstoffen mit Phasenänderung.

5. Verfahren nach einem der Ansprüche 1 bis 4,
**dadurch gekennzeichnet,**
**dass** der Wert der zweiten Wellenlänge (λ) 405 nm beträgt.

6. Verfahren nach einem der Ansprüche 1 bis 5,
**dadurch gekennzeichnet,**
**dass** der Wert der ersten Wellenlänge (λ') 193 nm beträgt.

7. Verfahren nach einem der Ansprüche 1 bis 6,
**dadurch gekennzeichnet,**
**dass** der Stapel (3) ein Substrat enthält, das gegenüber der ersten Wellenlänge durchlässig ist.

8. Verfahren nach Anspruch 7,
**dadurch gekennzeichnet,**
**dass** das Substrat die untere Schicht (4) bildet.

9. Verfahren nach Anspruch 8,
**dadurch gekennzeichnet,**
**dass** das Substrat aus Siliziumoxid, aus Aluminiumoxid, aus Zirkoniumoxid, aus Saphir oder aus Quarz besteht.

10. Verfahren nach Anspruch 7,
**dadurch gekennzeichnet,**
**dass** die untere Schicht (4) zwischen der oberen Schicht (2) und diesem Substrat (11) angeordnet wird.

11. Verfahren nach Anspruch 10,
**dadurch gekennzeichnet,**
**dass** die untere Schicht (4) eine dünne Schicht aus Aluminiumoxid oder aus einem Gemisch von Zinksulfid und Siliziumoxid oder aus Siliziumnitrid ist.

12. Verfahren nach einem der Ansprüche 10 und 11,
**dadurch gekennzeichnet,**
**dass** eine zusätzliche Schicht (12), die gegenüber der ersten Wellenlänge (λ') durchlässig und unempfindlich gegenüber der Ätzung der unteren Schicht (4) ist, zwischen der unteren Schicht (4) und dem Substrat (11) angeordnet wird.

13. Anwendung eines Verfahrens nach einem der Ansprüche 1 bis 12 bei der Fertigung eines Trägers zur optischen Aufzeichnung.
